Europäisches Patentamt

European Patent Office

Office européen des brevets

(11) Veröffentlichungsnummer: **0 318 692 B1**

# (12) EUROPÄISCHE PATENTSCHRIFT

(45) Veröffentlichungstag der Patentschrift: **29.01.92**

(21) Anmeldenummer: **88117517.8**

(22) Anmeldetag: **21.10.88**

(51) Int. Cl.⁵: **B60Q 1/26**, F21M 3/14

(54) Warnleuchte für Fahrzeuge.

(30) Priorität: **30.11.87 DE 8715822 U**

(43) Veröffentlichungstag der Anmeldung:
**07.06.89 Patentblatt 89/23**

(45) Bekanntmachung des Hinweises auf die
Patenterteilung:
**29.01.92 Patentblatt 92/05**

(84) Benannte Vertragsstaaten:
**BE DE FR GB IT NL**

(56) Entgegenhaltungen:
**DE-U- 8 518 587**
**FR-A- 587 069**
**FR-A- 618 782**
**FR-E- 51 157**
**GB-A- 136 677**

(73) Patentinhaber: **Hella KG Hueck & Co.**
**Postfach 28 40**
**W-4780 Lippstadt(DE)**

(72) Erfinder: **Schreckenberg, Franz Josef**
**Paderborner Strasse 74**
**W-4799 Borchen(DE)**
Erfinder: **Mörchen, Kurt**
**Falkenweg 8**
**W-4796 Salzkotten 2(DE)**
Erfinder: **Füchtjohann, Herbert**
**Buchenweg 5**
**W-4795 Delbrück(DE)**
Erfinder: **Kochjohann, Werner**
**Einsteinstrasse 7**
**W-4780 Lippstadt 6(DE)**

EP 0 318 692 B1

# Beschreibung

Die Neuerung bezieht sich auf eine Warnleuchte für Fahrzeuge, mit einem innerhalb einer lichtdurchlässigen, farbigen Lichthaube befindlichen, auf einem rotierenden Sockel angeordneten, lichtbündelnden Reflektor und einem im Strahlengang zwischen dem Reflektor und der Lichthaube angeordneten Abschatter.

Sonderfahrzeuge mit derartigen Warnleuchten sind in der Regel bei der Polizei, Feuerwehr oder ähnlichen Einrichtungen bekannt. Es ergeben sich jedoch bei Fahrzeugen der neueren Generation, an den aus verschiedenen Gründen extrem geneigten Frontscheiben, Blenderscheinungen durch vagabundierendes Licht, speziell durch Reflektion an Scheibenwischern, Zierleisten oder dergleichen.

In der FR-A-1 185 191 wird eine Warnleuchte, mit in die Lichthaube eingebauten Blendschirm aus transparentem Material vorgeschlagen. Gleichzeitig wird der direkt aus der Lampe austretende Lichtstrom durch eine Kalotte abgedeckt. Bei einer Bewegung des Fahrzeugs um seine Querachse erfolgt nachteiligerweise die Abstrahlung des vom Reflektor gerichteten Signallichts, nicht mehr in horizontaler Richtung, sondern schräg nach unten oder oben. Da das direkt aus der Glühlampe ausfallende Licht durch die Kalotte abgedeckt ist, verliert die Warnleuchte ihre Signalwirkung fast vollständig. Außerdem wirkt sich die Anbringung des Blendschirms über die gesamte Austrittsöffnung des Reflektors derartig nachteilig aus, daß ein großer Teil des Lichtes absorbiert wird.

Eine andere, aus dem DE-U-85 26 331 bezeichnete Variante, die Blendung zu unterdrücken, ist die Verwendung von Folien, welche entweder auf der Innen- oder Außenseite der farbigen Lichthaube angebracht sind. Abgesehen von der möglichen Beschädigung durch Waschanlagen bei Außenmontage ist es nachteilig, daß eine nicht mehr genügende Lichtmenge die Warnleuchte verläßt, da nicht nur, wie gewünscht direkt aus der Glühlampe austretendes und deshalb Blendung verursachendes Licht abgeschirmt wird, sondern auch das durch den Reflektor horizontal ausgerichtete Licht. Bei Abschattung eines nur in Fahrtrichtung weisenden Sektors durch eine Folie oder Blendschirm macht sich nachteiligerweise eine dem Fahrzeug und speziell seiner Windschutzscheibe angepaßte Einbaulage der Warnleuchte erforderlich.

Aufgabe der Neuerung ist es, die Warnleuchte für Fahrzeuge so auszubilden, daß eine Blendung der Fahrzeuginsassen vermieden wird, ohne dabei eine Reduzierung des aus dem Reflektor gerichtet austretenden Lichts in Kauf nehmen zu müssen. Dabei soll möglichst nur der Teil des Lichtes abgeschattet werden, der die Blendung der Fahrzeuginsassen hervorruft. Darüber hinaus sollen durch die Neuerungen alle bereits existierenden Warnleuchten mit rotierendem Reflektor ohne großen Aufwand bei einfacher Montage nachgerüstet werden können, wobei der neuerungsgemäße Abschatter als kostengünstiges Stanzteil gefertigt werden kann.

Diese Aufgabe wird gemäß der Neuerung dadurch gelöst, daß ein in parallel zur horizontalen Mittelebene verlaufende Lamellen unterteiltes Abschattungsblech den Abschatter bildet, das mit dem Reflektor fest verbunden ist, und daß das Abschattungsblech in der unteren Hälfte der Reflektoröffnung angeordnet ist. Dies bewirkt, daß trotz Bewegung des Fahrzeuges um die Querachse nicht nur Warnlicht nach schräg oben oder unten abgegeben wird, sondern auch durch den vom Abschatter nicht betroffenen Teil des direkt abgestrahlten Lichtes in horizontaler Richtung.

Weiterhin ist es von Vorteil, wenn das Abschattungsblech den Reflektor nur teilweise und zwar nur die untere Hälfte abdeckt. Dies bewirkt, daß trotz Bewegung des Fahrzeuges um die Querachse nicht nur Warnlicht nach schräg oben oder unten abgegeben wird, sondern auch durch den vom Abschatter nicht betroffenen Teil des direkt abgestrahlten Lichtes in horizontaler Richtung.

Eine weitere vorteilhafte Ausführungsform der Neuerung ist derart, daß das Abschattungsblech nur eine einzige Lamelle aufweist, wodurch das Abschattungsblech in seinem Gewicht bezüglich einer Unwucht noch leichter ausfällt und mit geringerem Aufwand gefertigt werden kann.

Ferner ist es von Vorteil, wenn das Abschattungsblech Strahlen des direkt ausfallenden Lichtbündels in einem Winkel ($\alpha$) abschattet, der etwa 45° unterhalb der in der optischen Achse des Reflektors liegenden Horizontalebene beginnt und etwa bis zur Vertikalen geht.

Die Neuerung ist in einer Zeichnung dargestellt, und zwar zeigt:

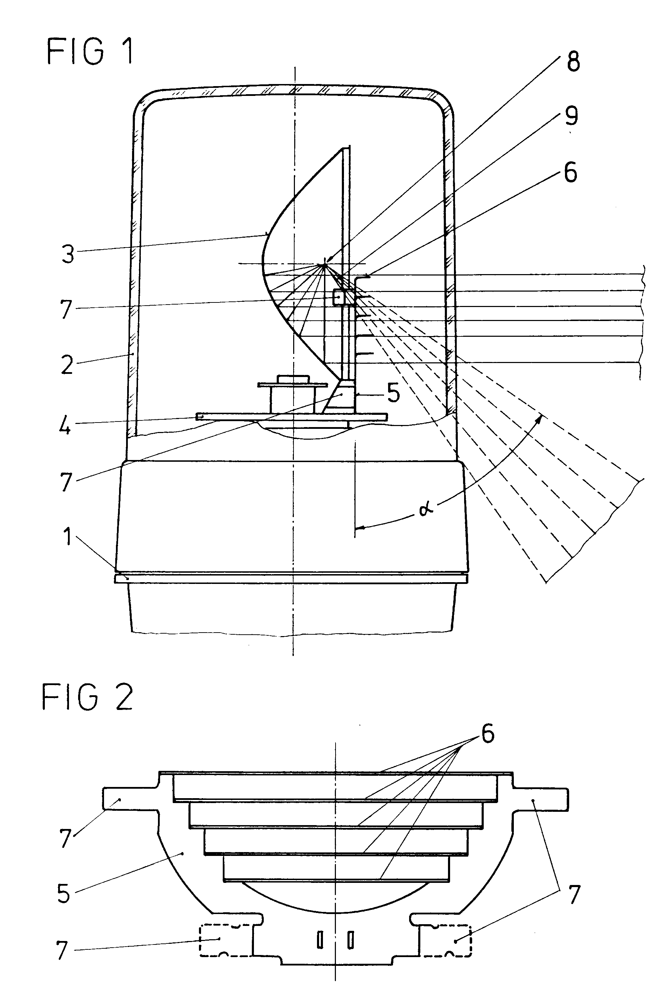

Figur 1 eine Seitenansicht der Warnleuchte mit einer teilweise geschnittenen Lichthaube,
Figur 2 das Abschattungsblech in Frontalansicht im unmontiertem Zustand.

In der Zeichnung ist eine Warnleuchte dargestellt, deren Gehäuse aus einem Leuchtenunterteil (1) und einer lichtdurchlässigen Lichthaube (2) besteht. Unterhalb der Lichthaube (2) und auf dem Leuchtenunterteil (1) ist ein drehbar gelagerter Sockel (4) angeordnet, der mit einem nicht dargestellten E-Motor verbunden ist. An dem Sockel (4) ist ein Reflektor (3) mit einer nicht dargestellten Glühlampe befestigt. Der Reflektor (3) ist an seiner unteren Austrittshälfte von einem Abschattungsblech (5) und seinen in horizontaler Ebene weisenden Lamellen (6) abgedeckt. Durch Biegefalze (7) wird das Abschattungsblech (5) fest mit dem Reflektor (3) und dem Sockel (4) verbunden. Das, von der im Brennpunkt (8) des Reflektors (3) angeordneten Lichtquelle abgegebene, direkt nach außen gerichtete Licht (9) wird im Winkel ($\alpha$) unter Abschattung durch die Lamellen (6) des Abschattungsblechs (5) am Austritt durch die Lichthaube (2) gehindert.

Die neuerungsgemäße Ausführung des Abschatters hinsichtlich der Anzahl seiner Lamellen ist einmal abhängig vom angestrebten Verhältnis des durchgehenden zum absorbierten Licht. Dabei ist die flächenmäßige Gestaltung einer Lamelle stets in Abhängigkeit von der Größe des Reflektors und dem Winkel des direkt abgestrahlten Lichts zu berücksichtigen.

## Patentansprüche

1. Warnleuchte für Fahrzeuge mit einem innerhalb einer lichtdurchlässigen, farbigen Lichthaube befindlichen, auf einem rotierenden Leuchtensockel angeordneten, lichtbündelnden Reflektor und einem im Strahlengang zwischen dem Reflektor und der Lichthaube angeordneten Abschatter, dadurch gekennzeichnet, daß ein in parallel zur horizontalen Mittelebene verlaufende Lamellen (6) unterteiltes Abschattungsblech (5) den Abschatter bildet, das mit dem Reflektor (3) fest verbunden ist, und daß das Abschattungsblech (5) in der unteren Hälfte der Reflektoröffnung angeordnet ist.

2. Warnleuchte für Fahrzeuge nach Anspruch 1, dadurch gekennzeichnet, daß das Abschattungsblech (5) sich über die gesamte untere Hälfte des Reflektoröffnung (3) erstreckt.

3. Warnleuchte für Fahrzeuge nach Anspruch 1, dadurch gekennzeichnet, daß das Abschattungsblech (5) mit nur einer Lamelle (6) versehen ist.

4. Warnleuchte für Fahrzeuge nach einem der vorstehenden Ansprüche, dadurch gekennzeichnet, daß das Abschattungsblech (5) Strahlen des direkt ausfallenden Lichtbündels (9) in einem Winkel ($\alpha$) abschattet, der etwa 45° unterhalb der in der optischen Achse des Reflektors liegenden Horizontalebene beginnt und etwa bis zur Vertikalen geht.

## Claims

1. Warning light for vehicles having a light-concentrating reflector located inside a translucent, coloured light cover and arranged on a rotating light base and having a shading element arranged in the optical path between the reflector and the light cover, characterised in that a shading plate (5) subdivided into laminas (6) running parallel to the horizontal centre plane forms the shading element and is permanently connected to the reflector (3), and in that the shading plate (5) is arranged in the lower half of the reflector opening.

2. Warning light for vehicles according to Claim 1, characterised in that the shading plate (5) extends over the entire lower half of the reflector opening (3).

3. Warning light for vehicles according to Claim 1, characterised in that the shading plate (5) is provided with only one lamina (6).

4. Warning light for vehicles according to one of the preceding claims, characterised in that the shading plate (5) shades beams of the directly incident light beam (9) at an angle ($\alpha$) which starts approximately 45° below the horizontal plane lying in the optical axis of the reflector and goes approximately as far as the vertical.

## Revendications

1. Gyrophare pour véhicules, comportant un réflecteur qui se trouve à l'intérieur d'une coupole colorée, transparente à la lumière, qui est disposé sur une douille tournante et qui rassemble les rayons lumineux en un faisceau, ainsi qu'un écran disposé sur le chemin des rayons, entre le réflecteur et la coupole, gyrophare caractérisé par le fait que c'est une tôle (5), divisée en lamelles (6) orientées parallèlement au plan horizontal médian et solidarisée avec le réflecteur (3), qui forme l'écran, et que la tôle formant écran (5) est disposée dans la moitié inférieure de l'ouverture du réflecteur.

2. Gyrophare pour véhicules selon la revendication 1, caractérisé par le fait que la tôle formant écran (5) s'étend sur toute la moitié inférieure de l'ouverture (3) du réflecteur.

3. Gyrophare pour véhicules selon la revendication 1, caractérisé par le fait que la tôle formant écran (5) ne comporte qu'une seule lamelle (6).

4. Gyrophare pour véhicules selon l'une des revendications précédentes, caractérisé par le fait que la tôle formant écran (5) forme écran pour les rayons du faisceau lumineux (9) à incidence directe, sous un angle ($\alpha$) qui commence à peu près à 45° en dessous du plan horizontal passant par l'axe optique du réflecteur et qui va à peu près jusqu'à la verticale.

FIG 1

FIG 2